# EUROPEAN PATENT APPLICATION

(11) **EP 4 293 860 A1**
(43) Date of publication of application: **20.12.2023**
(21) Application number: 22179090.0
(22) Date of filing: 15.06.2022
(51) Int. Cl.: H02J 7/00, H02J 7/34, H02J 50/12, H04B 5/00

(54) **PERSONAL CARE DEVICE WITH A RECHARGEABLE ENERGY SOURCE**

(71) Applicant: Braun GmbH, 61476 Kronberg im Taunus (DE)
(72) Inventor: KLEMM, Torsten, 61476 Kronberg (DE); ALI, Manal, 61476 Kronberg (DE)
(74) Representative: P&G Patent Germany

(57) **Abstract**

The present disclosure is concerned with a personal care device (10) having a rechargeable energy storage (110), a charging circuit (130) for receiving energy from an external energy source (300) and for charging the rechargeable energy storage, a first charging mode in which the rechargeable energy storage is charged to a predetermined maximum voltage value, and a user selectable second charging mode in which the rechargeable energy storage is charged until the voltage at the rechargeable energy source has reached a first predetermined voltage value that is lower than the predetermined maximum voltage value. The second charging mode is selected using a user-operable input element (140, 150). The charger (300) may comprise a motion or vibration sensor (340) to detect when the personal care device is placed on or lifted off the charger.

## Description

### FIELD OF THE INVENTION

The present disclosure is concerned with a personal care device that comprises a rechargeable energy source and at least one charging mode for charging the rechargeable energy source. The present disclosure is also concerned with a system comprising such a personal care device and a charger.

### BACKGROUND OF THE INVENTION

It is generally known to charge personal appliances such as personal care devices by means of a general-purpose charger or a proprietary charger, specifically a wireless charger providing energy for charging of a rechargeable battery of the personal appliance in a wireless manner, e.g., by inductive charging or resonance charging. The charger may make use of a standardized charging protocol such as Qi or of a proprietary charging protocol.

It is a general object to provide a personal care device that allows to make more efficient use of the energy provided by a charger and also to provide a system comprising a personal care device and a charger where the personal care device allows to make more efficient use of the energy provided by the charger.

### SUMMARY OF THE INVENTION

In accordance with at least one aspect, a personal care device is provided that comprises a rechargeable energy storage, a charging circuit for receiving energy from an external energy source and for charging the rechargeable energy storage, a first charging mode in which the rechargeable energy storage is charged to a predetermined maximum voltage value, a user selectable second charging mode in which the rechargeable energy storage is charged until the voltage at the rechargeable energy source has reached a first predetermined voltage value that is lower than the predetermined maximum voltage value.

In accordance with at least one aspect, a system comprising a personal care device and a charger is provided that comprises a personal care device as discussed herein and a charger arranged for providing energy to the personal care device.

### BRIEF DESCRIPTION OF THE DRAWINGS

The present disclosure will be further elucidated by a detailed description of example embodiments and with reference to figures. In the figures
- Fig. 1: is a schematic depiction of a personal care device in accordance with the present disclosure; and
- Fig. 2: is a schematic depiction of a system comprising the personal care device as shown in Fig. 1 and a charger cooperating with the personal care device for charging a rechargeable energy storage of the personal care device.

### DETAILED DESCRIPTION OF THE INVENTION

In the context of the present description "personal care" shall mean the nurture (or care) of the skin and of its adnexa (i.e., hairs and nails) and of the teeth and the oral cavity (including the tongue, the gums etc.), where the aim is on the one hand the prevention of illnesses and the maintenance and strengthening of health and on the other hand the cosmetic treatment and improvement of the appearance of the skin and its adnexa. It shall include the maintenance and strengthening of wellbeing. This includes skin care, hair care, and oral care as well as nail care. This further includes grooming activities such as beard care, shaving, and depilation. A "personal care device" thus means any device for performing such nurturing or grooming activity, e.g. (cosmetic) skin treatment devices such as skin massage devices or skin brushes; wet razors; electric shavers or trimmers; electric epilators; and oral care devices such as manual or electric toothbrushes, (electric) flossers, (electric) irrigators, (electric) tongue cleaners, or (electric) gum massagers. Terms in brackets mean that this is an optional feature. This shall not exclude that the proposed personal care device may have a more pronounced benefit in one or several of these nurturing or device areas than in one or several other of these areas. In the present description, an electric toothbrush was chosen to represent a personal care device. To the extent in which the details are not specific for an electric toothbrush, the proposed technology can be used in any other personal care device.

A rechargeable energy storage shall include a secondary battery / secondary cell or rechargeable battery such as a NiMH accumulator or a lithium-ion battery / Li-Ion battery. In the examples provide below, the rechargeable energy storage is exemplified as a lithium-ion battery.

In accordance with the present description, the personal care device has a first charging mode in which the rechargeable energy storage will be charged to its maximum nominal voltage value (under the condition that the personal care device is left on the charger until such charging is completed). In case of a Li-Ion battery this may occur, as is generally known, by applying first a constant current (CC) charging stage and then a constant voltage (CV) charging stage, where the latter is typically stopped once the charging current has dropped to a predetermined lower threshold value. A charging management system may then be provided together with the rechargeable energy storage as part of the personal care device. The first charging mode may be the default charging mode that is used by the personal care device and in particular by a processor of the personal care device if no superseding information is provided by a user.

In accordance with the present proposal, the personal care device also comprises a second charging mode that can be selected by the user, e.g., the user can select the second charging mode via a user-operable input element or via a separate control device that may be arranged to send data signals to the personal care device in a wireless manner, even though this shall not exclude a wired connection. The user-operable input element may be located on the personal care device and/or on the separate control device. The user-operable input element may be a button, a switch, a mechanical selector, a touch-sensitive switch or touch-sensitive display or the like. The second charging mode is characterized in that it leads to a stop of the charging of the rechargeable energy prior to reaching the maximum nominal velocity. This is enabled by providing a first predetermined voltage value that is lower than the maximum nominal voltage value and by comparing the voltage of the rechargeable energy storage with the first predetermined voltage value during the charging procedure. The personal care device is then arranged to stop the charging of the rechargeable energy storage in the second charging mode when the voltage at the rechargeable energy storage has reached or is above the first predetermined voltage value. The personal care device may comprise a processor structured and arranged for comparing the first predetermined voltage value and the voltage at the rechargeable energy storage and for interrupting or stopping the charging procedure once the comparison result indicates that the voltage at the rechargeable energy storage has reached or is above the first predetermined voltage value. A charging management system as mentioned before may be considered to be a part of the processor.

For sake of completeness, it is mentioned here that the second charging mode only affects the personal care device. As will be discussed below, a wireless charger may be used, and the charger may recognize that energy offered for charging is not used and may then put itself into a standby-mode in which no further energy is offered. In case of a wired charging, the personal care device will just stop consuming energy provided via the wired connection. As will be explained below in more detail, the second charging mode serves to enable a more efficient charging procedure by stopping the charging prior to reaching a charging stage in which a lower charging efficiency is achieved, specifically for wireless charging such as a resonance charging. As the control of the second charging mode resides completely within the personal care device, there is no need for a communication or data exchange between the charger and the personal care device. The latter shall not exclude that such communication is nonetheless present, e.g., to update a firmware on the personal care device or the like.

As was already mentioned, the personal care device may be an electric toothbrush. The rechargeable energy storage may be a rechargeable lithium-ion battery. In case of a lithium-ion battery, the first predetermined voltage value of the second charging mode may be chosen such a second charging stage, e.g., a constant voltage mode is avoided, i.e., that the charging is stopped while the charging procedure is still in a first charging stage, e.g., in a constant current mode. The first predetermined voltage value may then be set to about 3.95 Volt for a lithium-ion battery that has a nominal maximum voltage value or predetermined maximum voltage value of about 4.2 Volt. The first predetermined voltage value may be set to be in the range of between 3.9 Volt to 4.0 Volt for a lithium-ion battery that has a nominal maximum voltage value or predetermined maximum voltage value of 4.2 Volt. This is to be understood as an example for a certain battery type. For different lithium-ion batteries different voltages may be set due to the detailed chemistry and/or aging effects or the application. If the voltage setting should assure that, e.g., the charging is stopped in constant current mode just shortly before the start of the constant voltage stage, the voltage to be set for a specific battery can be identified by performing a few tests. For a lithium-ion battery that has a maximum nominal voltage of, e.g., 3.65 Volt or 4.1 Volt or 4.35 Volt, the first predetermined voltage value may be respectively modified over the example of about 3.95 Volt or the range may be modified over the example of between 3.9 Volt and 4.0 Volt.

The personal care device may be structured and arranged to have a third charging mode that can be selected by a user, where in the third charging mode the charging is stopped when the voltage at the rechargeable energy source has reached a second predetermined voltage value. The second predetermined voltage value may be higher than the first predetermined voltage value. In case of a lithium-ion battery, the higher second predetermined voltage value may cause the charging to be in the constant voltage mode already, but the overall somewhat lower efficiency may be counterbalanced by a higher capacity to which the lithium-ion battery is charged.

With respect to charging efficiency, for one example where a resonance charging circuit was used for wireless energy transfer between the charger and the personal care device comprising a lithium-ion battery charged in constant current and successively constant voltage mode, it was found that charging efficiency was increasing from 3.0 Volt to about 3.9 Volt battery voltage, namely from about 33% efficiency to about 41% efficiency and that charging efficiency was strongly dropping beyond about 4.0 Volt battery voltage, namely from about 40% efficiency to about 15% efficiency at about 4.05 Volt battery voltage. In this latter regime, the energy provided by the charge is less efficiently used by the charging circuit in the personal care device.

The personal care device or a separate control device may comprise an indicator to indicate the estimated or predetermined efficiency of the available charging modes, e.g., of the first and of the second charging mode, so that the user can better understand the selection being offered.

In accordance with some aspects, a system as described herein comprises a personal care device in accordance with the present disclosure and a charger. The charger may be structured and arranged for wireless charging of the rechargeable energy storage of the personal care device. The charger may comprise a primary side of a charging circuit and the personal care device may comprise a secondary side of the charging circuit. The charging circuit may be structured and arranged for inductive charging and/or for resonance charging. The charging circuit may apply a standard charging protocol such as Qi charging. The charging circuit may be realized as is described in US 10 218 212 B2, which document shall be included herein by reference.

The charger may be connectable with mains supply. The charger may comprise an internal energy storage such as a rechargeable energy storage, e.g., a rechargeable lithium-ion battery or a rechargeable NiMH battery or the like. The charger may then be structured to be used without a connection to mains supply, e.g., the charger may be used during travel. The internal energy storage of the charger may have a higher capacity than the capacity of the rechargeable energy storage of the personal care device, where the capacity of the internal energy storage of the charger may be 1.1 times higher or 1.5 times higher or twice or thrice or generally a manifold of times higher than the capacity of the rechargeable energy storage of the personal care device. The system may then make efficient use of the internal energy storage of the charger when the user selects the second charging mode of the personal care device and less energy is lost in comparison to the first charging mode, which means that the energy available in the internal energy storage of the charger can provide more energy for the rechargeable energy source of the personal care device. In the electric toothbrush example this means that a user can brush longer when travelling with the available capacity of the internal energy source of the charger when the second charging mode is used in comparison to the first charging mode, as the latter is less efficient, in particular in case of a lithium-ion battery.

The charger may comprise a motion or vibration sensor or any other sensor or detector suitable to detect when a personal care device is put onto the charger and/or to detect when the personal care device is taken off the charger. The sensor may be sensible to a positional change of the charger and instead of a motion or vibration sensor, an altitude or barometric sensor or a magnetometer may be used. The charger may have a processor that is connected with the mentioned sensor and may then be structured and/or arranged to initiate the provision of energy via a primary side charging circuit. The processor may then check whether the provided energy is utilized by a receiver such as a device to be charged and/or that a resonance circuit is formed and may then continue to provide energy in a wireless manner until the device to be charged, e.g., a personal care device, stops utilizing or consuming the provided energy in a manner indicative of charging. Once the processor detects that the energy is not utilized anymore, the processor may set the charger into a stand-by mode and energy provision may then be only activated again in response to a signal from the sensor, e.g., the motion and vibration sensor. This shall not exclude that there may be a communication, in particular a wireless communication between the charger and the personal care device and the personal care device may inform the charger that it requires energy, and the charger may inform the personal care device about the efficiency of energy usage and/or of the amount of energy left in the internal energy storage of the charger. The charger may comprise an indicator for indicating said efficiency and/or said remaining capacity of the internal energy storage.

The constant voltage charging stage previously mentioned is characterized by an essentially constant or only slowly increasing battery voltage in combination with a decreasing current. As losses due to other energy consumers in the personal care device are always present, the efficiency of the energy provided for charging drops when the current drops in the constant voltage stage. That means that charging of the rechargeable energy storage in constant voltage mode tends to become less efficient the more the current drops. This is even more so the case if the charging circuit between the charger and the personal care device is a resonance charging circuit as the constant voltage stage forces the resonance charging circuit to work outside of its most efficient resonance or at least close to resonance condition. If the personal care device stops charging when the charging drops in its efficiency, i.e., when the battery voltage reaches or gets above the first predetermined voltage value, the charger may be structured and/or arranged to identify that the personal care device has stopped using the provided energy and then also stops providing energy so that an internal energy storage of the charger may then be more efficiently used.

In accordance with at least one aspect, a personal care device is considered that comprises a rechargeable energy storage, a charging circuit for receiving energy from an external energy source and for charging the rechargeable energy storage, and a user selectable charging mode in which the rechargeable energy storage is charged until the voltage at the rechargeable energy source has reached a first predetermined voltage value that is lower than a predetermined maximum voltage value to which the rechargeable energy source can be charged, in particular where the rechargeable energy storage is a lithium-ion battery and the first predetermined voltage value is chosen such that charging of the lithium-ion battery is stopped prior to switching from a constant current charging stage into a constant voltage charging stage.

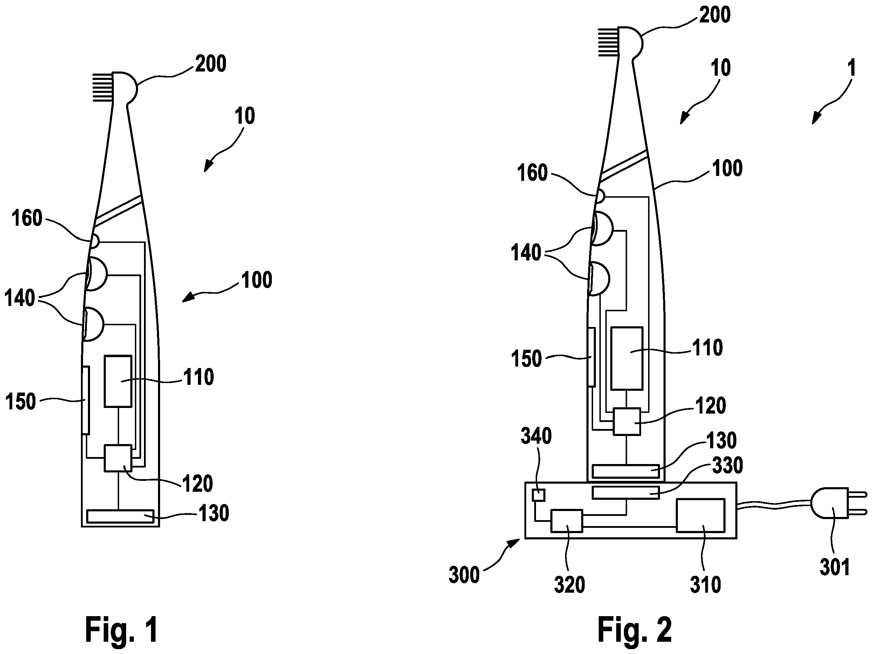

Fig. 1 is a schematic depiction of an example personal care device 10 in accordance with the present disclosure. The personal care device 10 is here realized as an electric toothbrush, which is understood to be a non-limiting example. The personal care device 10 comprises a handle section 100 and a head section 200 that may be detachably attached to the handle section 100. The personal care device 10 comprises a rechargeable energy storage 110 and may further comprise a processor 120, a secondary side charging circuit 130, and/or one or several user-operable input elements 140, 150. The rechargeable energy storage 110 may be realized as a lithium-ion battery.

At least one of the user-operable input elements 140, 150 may be realized as a button or switch or selector and alternatively or additionally, at least one user-operable input elements 140, 150 may be realized as a touch-sensitive element such as a touch-sensitive display. In Fig. 1, the personal care device 10 is shown to comprise a secondary side charging circuit 130 for wireless charging of the rechargeable energy storage 110. This shall not exclude that the personal care device 10 has additionally or alternatively a connector for direct charging.

The personal care device 10 may have a first charging mode in which the processor 120 is arranged to charge the rechargeable energy storage up to a maximum nominal voltage value or capacity, i.e., up to full charge. This may be the default or standard charging mode of the personal care device 10. Further, the personal care device 10 may have a second charging mode in which the processor 120 is structured and/or arranged to charge the rechargeable energy storage up to a first predetermined voltage value that is lower than the maximum nominal voltage to which the rechargeable energy source can be charged, which first predetermined voltage value may be chosen so that in case of a lithium-ion battery realizing the rechargeable energy storage 100, where a typical lithium-ion battery charging concept employing a constant current stage followed by a constant voltage stage is used and the constant voltage stage is avoided, i.e., the charging is stopped in the constant current stage. That means that the processor 120 would then be structured and/or arranged to stop the charging of the rechargeable energy storage 110 once the voltage at the rechargeable energy storage 110 has reached or becomes higher than the first predetermined voltage value. In some embodiments, the first predetermined voltage value can be set to be in a range of between 3.9 Volt and 4.0 Volt such as 3.95 Volt. These settings may be used in case the maximum nominal voltage value is about 4.2 Volt. If the maximum nominal voltage has another value, the first predetermined voltage value may be respectively changed. It shall also be understood, as already mentioned, that the first predetermined voltage may depend on the exact type of battery, on the chemistry used, the age of the battery, the charging history and/or the application in which the battery is used. Instead of stopping in constant current mode, the first predetermined voltage may also be set such that charging is stopped at an early timepoint in constant voltage charging mode. The user can select the second charging mode by using a user-operable input element 140, 150 as was described. The chosen charging mode may be indicated to the user by means of an indicator 160, e.g., a visual indicator such as an LED, and/or the chosen charging mode may be displayed on a display 150.

Fig. 2 is a depiction of an example system 1 comprising a charger 300 and a personal care device 10, which is here shown to be identical to the personal care device of Fig. 1 and thus the same reference numerals are used as in Fig. 1 and reference is made to the description relating to Fig. 1. The charger 300 may comprise an internal energy storage 310, a processor 320, a primary side charging circuit 330 and/or a sensor sensitive to a positional change of the charger, e.g., a motion or vibration sensor 340, which is understood to be a sensor that can detect when a user places the personal care device 10 onto the charger 300 or lifts the personal care device 10 off the charger etc. While it is indicated that the charger 300 may be connectable to mains supply via a standard connector 301, it is contemplated that the charger 300 comprises an internal energy source 310 having a capacity that allows charging of the rechargeable energy storage 110 of the personal care device 10 at least once, and in some embodiment at least twice or thrice etc. This means that the charger 300 can then effect charging of the personal care device 10 without being connected to mains supply. The charger 300 may then be considered a power bank type of charger. The charger 300 may comprise a primary side charging circuit 330 for cooperating with the secondary side charging circuit 130 of the personal care device 10 so that energy transfer from the charger 300 to the personal care device 10 is enabled in a wireless manner. The primary side charging circuit 330 and the secondary side charging circuit 130 may together form a wireless charging circuit such as an inductive charging circuit or a resonance charging circuit.

It had already been described in general terms and with respect to Fig. 1 that the personal care device 10 may have a second charging mode that can be selected by a user, and which second charging mode stops charging of the rechargeable energy source 110 of the personal care device 10 when a voltage at the rechargeable energy source has reached a first predetermined voltage value. Such a second charging mode does not require any communication with the charger but may solely rely on a measurement of the voltage of the rechargeable energy storage of the personal care device 10. This shall of course not exclude that the personal care device 10 and the charger 300 are structured and/or arranged for communication, in particular wireless communication. This shall also not exclude that the charging mode generally referred herein to as the second charging mode may be the only charging mode of the personal care device. The personal care device 10 and the charger 300 may be provided by the same manufacturer and may comprise a mechanical lock and key fitting to ensure that only intended personal care devices can be charged on the charger 300. Instead of a mechanical lock and key fitting, the personal care device 10 and the charger 300 may be structured and/or arranged for identifying each other or at least the charger 300 may be structured and/or arranged to identify whether a device put onto the charger is an intended device, e.g., by a specific electronic behavior of the personal care device 10. E.g., when the processor 320 of the charger 300 determines, e.g., based on a signal from the motion or vibration sensor 340 that a device was put onto the charger 300, the processor 320 may switch on the primary side charging circuit 330 so that energy is offered to the device on the charger 300. Depending on an analysis of electronic parameters, the processor 320 may then be structured and/or arranged to determine whether the device on the charger 300 is indeed an intended personal care device 10 and not a different device or just a piece of metal or the like and further may be structured and/or arranged to determine whether the intended personal care device 10 needs charging of its rechargeable energy storage 110. Reference is made to document US 10 218 212 B2, which shall be included herein by reference. The processor 310 may be structured and/or arranged to determine when a personal care device 10 that is being provided with energy stops using or consuming the provided energy so that the processor 310 may then put the charger into a stand-by mode in which no energy is provided and the processor 310 may then again monitor the motion or vibration sensor 340.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A personal care device comprising
a rechargeable energy storage;
a charging circuit for receiving energy from an external energy source and for charging the rechargeable energy storage;
a first charging mode in which the rechargeable energy storage is charged to a predetermined maximum voltage value;
a user selectable second charging mode in which the rechargeable energy storage is charged until the voltage at the rechargeable energy source has reached a first predetermined voltage value that is lower than the predetermined maximum voltage value.

2. The personal care device in accordance with claim 1, wherein the personal care device is an electric toothbrush.

3. The personal care device in accordance with claim 1 or claim 2, wherein the rechargeable energy source is a rechargeable lithium-ion battery.

4. The personal care device in accordance with claim 3, wherein the charging circuit is structured and/or arranged to employ a charging concept having a first charging stage in which the lithium-ion battery is charged in a constant current mode and a second charging stage succeeding the first charging stage in which the lithium-ion battery is charged in a constant voltage mode.

5. The personal care device in accordance with claim 4, wherein the first predetermined voltage value is chosen such that the charging of the lithium-ion battery is stopped while the charging circuit is in the first charging stage.

6. The personal care device in accordance with one of claims 1 to 5, wherein the personal care device comprises at least one user-operable input element arranged for selecting the second charging mode.

7. The personal care device in accordance with one of claims 1 to 6, comprising a user selectable third charging mode in which the rechargeable energy storage is charged until the voltage at the rechargeable energy source has reached a second predetermined voltage value.

8. The personal care device in accordance with one of claims 1 to 7, wherein the predetermined first voltage value is in a range of between 3.9 Volt and 4.0 Volt for a maximum nominal voltage of about 4.2 Volt, in particular wherein the predetermined first voltage value is about 3.95 Volt.

9. A system comprising a personal care device in accordance with any of the claims 1 to 8 and a charger arranged for providing energy to the personal care device.

10. The system in accordance with claim 9, wherein the charger is structured and arranged for providing the energy in a wireless manner.

11. The system in accordance with claim 9 or claim 10, wherein the charger comprises a primary side of an inductive charging circuit and the charging circuit of the personal care device realizes a secondary side of the inductive charging circuit.

12. The system in accordance with any one of claims 9 to 11, wherein the charger comprises a first circuit portion of a wireless resonance charging circuit and the charging circuit of the personal care device realizes a secondary side of the resonance charging circuit.

13. The system in accordance with any one of claims 9 to 12, wherein the charger comprises an internal energy storage that has a higher capacity than a capacity of the rechargeable energy storage of the personal care device.

14. The system in accordance with any one of claims 9 to 13, wherein the charger comprises a motion or vibration sensor and the charger is structured and arranged to provide energy in response to a detected motion or vibration.

15. The system in accordance with any one of claims 9 to 14, wherein the charger is structured and/or arranged to monitor whether energy provided to the personal care device is utilized and to switch into a standby mode in case the provided energy is not used, where in the stand-by mode the charger is arranged to not provide energy for charging.
